(19)

**Europäisches Patentamt**
**European Patent Office**
**Office européen des brevets**

(11) **EP 3 695 249 B1**

(12) **EUROPÄISCHE PATENTSCHRIFT**

(45) Veröffentlichungstag und Bekanntmachung des Hinweises auf die Patenterteilung:
**17.08.2022 Patentblatt 2022/33**

(21) Anmeldenummer: **18796837.5**

(22) Anmeldetag: **28.09.2018**

(51) Internationale Patentklassifikation (IPC):
*E05F 15/43* (2015.01)    *G01S 7/481* (2006.01)
*G01S 17/04* (2020.01)    *G01S 17/08* (2006.01)
*G01S 17/42* (2006.01)    *G01S 17/93* (2020.01)
*G01D 5/28* (2006.01)

(52) Gemeinsame Patentklassifikation (CPC):
**G01S 17/08; E05F 15/43; G01S 7/4815;**
**G01S 17/04; G01S 17/42; G01S 17/93;**
E05F 15/611; E05F 15/73; E05F 2015/434;
E05Y 2400/53; E05Y 2400/532; G01D 5/28

(86) Internationale Anmeldenummer:
**PCT/DE2018/200089**

(87) Internationale Veröffentlichungsnummer:
**WO 2019/072344 (18.04.2019 Gazette 2019/16)**

(54) **TÜRSENSOREINRICHTUNG UND VERFAHREN ZUM BETREIBEN EINER TÜRSENSOREINRICHTUNG**

SENSOR DEVICE FOR A DOOR AND METHOD OF OPERATING THE SAME

DISPOSITIF DE DÉTECTION DE PORTE ET MÉTHODE POUR LE FAIRE FONCTIONNER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.10.2017 DE 102017218102**

(43) Veröffentlichungstag der Anmeldung:
**19.08.2020 Patentblatt 2020/34**

(73) Patentinhaber: **Pepperl+Fuchs SE**
**68307 Mannheim (DE)**

(72) Erfinder:
• **EGGELING, Markus**
**12277 Berlin (DE)**

• **STRAUCH, Reinhard**
**13437 Berlin (DE)**
• **BARTSCH, Stephan**
**12207 Berlin (DE)**

(74) Vertreter: **Fischer, Uwe**
**Patentanwalt**
**Moritzstraße 22**
**13597 Berlin (DE)**

(56) Entgegenhaltungen:
**EP-A2- 1 375 808    DE-B4-102008 044 990**
**US-A- 4 851 746    US-A1- 2013 269 255**

**Beschreibung**

Die Erfindung bezieht sich auf eine Türsensoreinrichtung mit den Merkmalen gemäß dem Oberbegriff des Patentanspruchs 1. Eine solche Türsensoreinrichtung ist aus der europäischen Druckschrift EP 1 375 808 A2 bekannt.

Andere Türsensoreinrichtungen sind in der deutschen Patentschrift DE 10 2008 044 990 B4 und der US-Patentschrift US 4,851,746 A beschrieben.

Der Erfindung liegt die Aufgabe zugrunde, eine Türsensoreinrichtung anzugeben, die einen sicheren Betrieb mit geringem Montageaufwand erlaubt.

Diese Aufgabe wird erfindungsgemäß durch eine Türsensoreinrichtung mit den Merkmalen gemäß Patentanspruch 1 gelöst. Vorteilhafte Ausgestaltungen der erfindungsgemäßen Türsensoreinrichtung sind in Unteransprüchen angegeben.

Ein wesentlicher Vorteil der erfindungsgemäßen Türsensoreinrichtung ist darin zu sehen, dass diese - ohne die Notwendigkeit einer vorherigen Einlernfahrt - betriebsbereit sein kann, nachdem diese montiert ist. Dies ist konkret darauf zurückzuführen, dass das Erreichen einer vorgegebene Schutzfeldgrenze, die das Türelement beim Verschwenken nicht erreichen oder überschreiten darf, sensorseitig allein auf der Basis der drei anspruchsgemäß vorgesehenen Werte erkannt werden kann.

Wie weiter unten erläutert wird, können der Winkelwert und die messstellenindividuellen Vorlaufwinkelwerte mittels eigener Sensoren der Türsensoreinrichtung erfasst werden; alternativ können sie beim Parametrieren der Türsensoreinrichtung eingegeben werden.

Der den jeweiligen Drehwinkel des Türelements angebende Winkelwert kann von der Türsensoreinrichtung selbst gemessen werden, von einem anderen Sensor gemessen und an die Türsensoreinrichtung übertragen werden oder von einem das Türelement schwenkenden Antrieb als Stellgröße übermittelt werden.

Vorteilhaft ist es, wenn die Auswerteinrichtung empfangene Strahlung derjenigen Messstellen verwirft, in modifizierter Weise auswertet oder die Sendeeinrichtung für diejenigen Messstellen abschaltet, für die die Ausschlussbedingung erfüllt ist.

Das Verlagern der Messstelle nach oben erfolgt vorzugsweise derart, dass die verlagerte Messstelle auf der Schutzfeldgrenze liegt, und zwar mit einem vertikalen Abstand vom Fußboden.

Vorzugsweise berücksichtigt die Auswerteinrichtung, wenn sie die empfangene Strahlung bezogen auf die fiktiv vom Fußboden nach oben verlagerte Messstelle auswertet, die empfangene Strahlung ausschließlich für einen Strahlbereich, der sich von der Türsensoreinrichtung bis zu der vom Fußboden nach oben verlagerten Messstelle erstreckt.

Die Auswerteinrichtung wird die Höhe der fiktiv vom Fußboden nach oben verlagerten Messstelle bevorzugt ermitteln gemäß:

$$Hci = f(\theta, H, \gamma, \gamma\max, Xi) = H \cdot \left( 1 - \frac{Xi \cdot \tan(\gamma\max - \gamma)}{H \cdot \tan(\theta)} \right)$$

wobei

Hci die Höhe der fiktiv vom Fußboden nach oben verlagerten i-ten Messstelle,
$\gamma$ einen den jeweiligen Drehwinkel des Türelements angebenden Winkelwert,
ymax den Maximalwert, der den fest vorgegebenen, maximal zulässigen Drehwinkel des Türelements angibt,
$\theta$ den Abstrahlwinkelwert, der den Abstrahlwinkel zwischen dem oder den Überwachungsstrahlen und der Türblattebene angibt,
H einen Höhenwert, der die Anbauhöhe der Türsensoreinrichtung an dem Türelement über dem Fußboden angibt, und
Xi einen messstellenindividuellen Abstandswert, der den radialen Abstand der jeweiligen i-ten Messstelle von der Drehachse des Türelements angibt,
bezeichnet.

Auch ist es vorteilhaft, wenn die Auswerteinrichtung die Länge des Strahlweges bis zu der fiktiv vom Fußboden nach oben verlagerten Messstelle ermittelt gemäß:

$$Li = f(\theta, \gamma, \gamma\max, Xi) = \frac{Xi \cdot \tan(\gamma\max - \gamma)}{\sin(\theta)}$$

wobei

γ einen den jeweiligen Drehwinkel des Türelements angebenden Winkelwert,
ymax den Maximalwert, der den fest vorgegebenen, maximal zulässigen Drehwinkel des Türelements angibt,
θ den Abstrahlwinkelwert, der den Abstrahlwinkel zwischen dem oder den Überwachungsstrahlen und der Türblattebene angibt, Li Länge des Strahlweges und
Xi einen messstellenindividuellen Abstandswert, der den radialen Abstand der jeweiligen Messstelle von der Drehachse des Türelements angibt,
bezeichnet und
die Auswerteinrichtung ausschließlich solche empfangene Strahlung berücksichtigt, die maximal das Zweifache der Länge des Strahlweges Li zurückgelegt hat.

Die Auswerteinrichtung ermittelt den messstellenindividuellen Vorlaufwinkelwert vorzugsweise unter Heranziehung eines Höhenwerts, der die Anbauhöhe der Türsensoreinrichtung an dem Türelement über dem Fußboden angibt, eines Abstrahlwinkelwerts, der den Abstrahlwinkel zwischen dem oder den Überwachungsstrahlen und der Türblattebene angibt, und eines messstellenindividuellen Abstandswerts, der den Abstand der jeweiligen Messstelle von der Drehachse des Türelements angibt.

Die Auswerteinrichtung ermittelt den messstellenindividuellen Vorlaufwinkelwert vorzugsweise gemäß

$$\beta i = \arctan\left[\frac{H}{Xn}\tan\theta\right]$$

βi den Vorlaufwinkelwert, θ den Abstrahlwinkelwert, H den Höhenwert und Xi den messstellenindividuellen Abstandswert bezeichnet.

Die Türsensoreinrichtung misst ihre Anbauhöhe vorzugsweise selbst und bestimmt den Höhenwert somit vorzugsweise selbst.

Alternativ oder zusätzlich kann vorgesehen sein, dass die Türsensoreinrichtung eine Eingabeschnittstelle aufweist, die eine externe Eingabe des Höhenwerts ermöglicht.

Mit Blick auf die messstellenindividuellen Abstandswerte wird es als vorteilhaft angesehen, wenn die Auswerteinrichtung den messstellenindividuellen Abstandswert zumindest einer Messstelle auf der Basis eines Startwerts und eines messstellenindividuellen Relativwertes ermittelt, wobei der Startwert den Abstand der zu der Drehachse des Türelements nächstliegenden Messstelle von der Drehachse angibt und wobei der messstellenindividuellen Relativwert den Abstand der zumindest einen Messstelle von der zu der Drehachse des Türelements nächstliegenden Messstelle angibt.

Auch kann es vorteilhaft sein, wenn die Auswerteinrichtung die messstellenindividuellen Abstandswerte auf der Basis eines Startwerts, der den Abstand der zu der Drehachse nächstliegenden Messstelle von der Drehachse des Türelements angibt, eines Rasterwerts, der den Rasterabstand zwischen den Messstellen angibt, und einer messstellenindividuellen Rasterposition der jeweiligen Messstelle bestimmt.

Die Türsensoreinrichtung misst ihren Abstand von der Drehachse vorzugsweise selbst und/oder bestimmt den Startwert vorzugsweise ebenfalls selbst.

Alternativ oder zusätzlich kann die Türsensoreinrichtung eine Eingabeschnittstelle aufweisen, die eine externe Eingabe des Abstands der Türsensoreinrichtung von der Drehachse und/oder des Startwerts ermöglicht.

Der genannte Rasterwert ist bevorzugt in der Türsensoreinrichtung gespeichert.

Die Türsensoreinrichtung bestimmt den Abstrahlwinkelwert vorzugsweise selbst.

Auch ist es vorteilhaft, wenn die Türsensoreinrichtung eine Eingabeschnittstelle aufweist, die eine externe Eingabe des Abstrahlwinkelwerts ermöglicht.

Die Sendeeinrichtung weist vorzugsweise eine Vielzahl an Einzelemittern auf, die auf einer fiktiven Emitterlinie angeordnet sind und jeweils eine Messstellen bilden und vorzugsweise gemeinsam ein Lichtgitter erzeugen.

Alternativ, aber ebenso vorteilhaft, kann die Sendeeinrichtung eine Scannvorrichtung sein, die den Bereich vor dem Türelement entlang einer Scannlinie unter Bildung einer Vielzahl an Messstellen scannt, wobei die Länge der Scannlinie und/oder die Anzahl der ausgewerteten Messstellen davon abhängt, wie viele Messstellen in Abhängigkeit von den zumindest drei Werten verworfen werden.

Die Türsensoreinrichtung ist bevorzugt ein Lichttaster.

Die Erfindung bezieht sich darüber hinaus auf ein Türelement, insbesondere eine Drehflügeltür. Erfindungsgemäß ist vorgesehen, dass diese mit einer Türsensoreinrichtung ausgestattet ist, wie sie oben beschrieben worden ist.

Bezüglich der Vorteile des erfindungsgemäßen Türelements sei auf die obigen Ausführungen im Zusammenhang mit der erfindungsgemäßen Türsensoreinrichtung verwiesen.

Die Erfindung bezieht sich darüber hinaus auf ein Verfahren zum Betreiben einer Türsensoreinrichtung. Erfindungsgemäß sind diesbezüglich die Merkmale gemäß Patentanspruch 15 vorgesehen.

Bezüglich der Vorteile des erfindungsgemäßen Verfahrens sei auf die obigen Ausführungen im Zusammenhang mit der erfindungsgemäßen Türsensoreinrichtung verwiesen.

Die Erfindung wird nachfolgend anhand von Ausführungsbeispielen näher erläutert; dabei zeigen beispielhaft

Figur 1     ein Ausführungsbeispiel für eine erfindungsgemäße Türsensoreinrichtung, die an einem Türelement montiert ist, wobei die Figur 1 eine Frontalansicht auf das Türelement zeigt,

Figur 2     das Türelement gemäß Figur 1 mit der daran montierten Türsensoreinrichtung mit Blick auf die Stirnkante des Türelements,

Figur 3     die Türsensoreinrichtung und das Türelement gemäß den Figuren 1 und 2 in einer Sicht von oben, wobei die Figur 3 einen geschlossenen Zustand des Türelements zeigt,

Figur 4     das Türelement gemäß den Figuren 1 bis 3 bei einem Öffnen des Türelements bzw. bei einem Verschwenken des Türelements in Richtung einer vorgegebenen Schutzfeldgrenze,

Figur 5     beispielhaft eine mögliche Arbeitsweise der Türsensoreinrichtung für den Fall, dass diese empfangene Strahlung bezogen auf eine fiktive vom Fußboden nach oben verlagerte Messstelle auswerten soll,

Figur 6     ein Ausführungsbeispiel für eine Sendeeinrichtung, die bei der Türsensoreinrichtung gemäß den Figuren 1 bis 5 eingesetzt werden kann,

Figur 7     ein weiteres Ausführungsbeispiel für eine Sendeeinrichtung, die bei der Türsensoreinrichtung gemäß den Figuren 1 bis 5 eingesetzt werden kann, und

Figur 8     ein Ausführungsbeispiel für eine Auswerteinrichtung, die bei der Türsensoreinrichtung gemäß den Figuren 1 bis 5 eingesetzt werden kann.

In den Figuren werden der Übersicht halber für identische oder vergleichbare Komponenten stets dieselben Bezugszeichen verwendet.

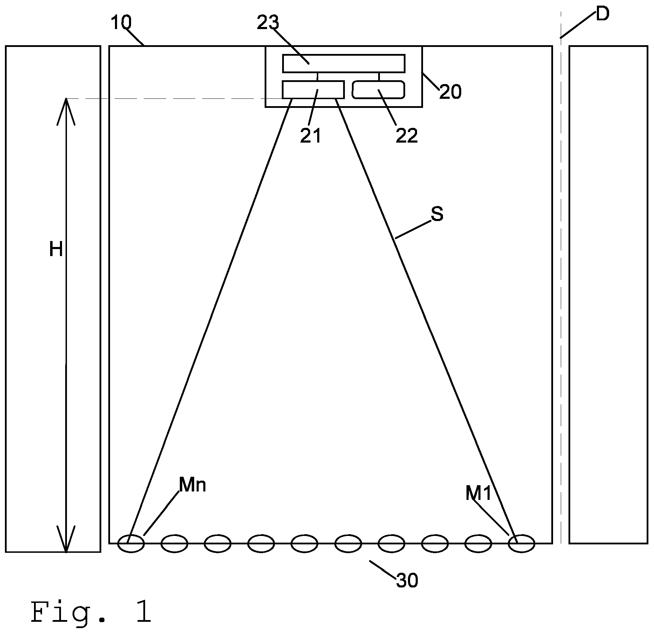

Die Figur 1 zeigt in einer Frontaldarstellung ein Türelement 10, das um eine Drehachse D drehbar ist. Bei dem Türelement 10 kann es sich beispielsweise um eine Drehflügeltür handeln. Das Türelement 10 ist mit einer Türsensoreinrichtung 20 ausgestattet, die eine Sendeeinrichtung 21, eine Empfangseinrichtung 22 und eine Auswerteinrichtung 23 umfasst.

Die Sendeeinrichtung 21 der Türsensoreinrichtung 20 erzeugt einen oder mehrere Überwachungsstrahlen S, die auf einem Fußboden 30 Messstellen M1 bis Mn bilden. Bei dem Ausführungsbeispiel gemäß Figur 1 sind beispielhaft zehn Messstellen gezeigt, es gilt hier also n=10. Die Anzahl der Messstellen ist selbstverständlich nur beispielhaft zu verstehen.

Befindet sich ein Objekt im Bereich des oder der Messstrahlen S, so wird dies die Auswerteinrichtung 23 anhand der von der Empfangseinrichtung 22 empfangenen Strahlung feststellen, beispielsweise an der Intensität der Strahlung oder der Entfernung der durch das Objekt gebildeten Reflexions- und/oder Streuungsstelle. Im Falle eines erkannten Objekts erzeugt die die Auswerteinrichtung 23 ein Objekterkennungssignal, das ein erkanntes Objekt anzeigt, und andernfalls ein Signal bzw. Objekterkennungssignal, das kein erkanntes Objekt anzeigt.

Ein Höhenwert, der die Anbauhöhe der Türsensoreinrichtung 20 an dem Türelement 10 über dem Fußboden 30 angibt, ist in der Figur 1 mit dem Bezugszeichen H gekennzeichnet.

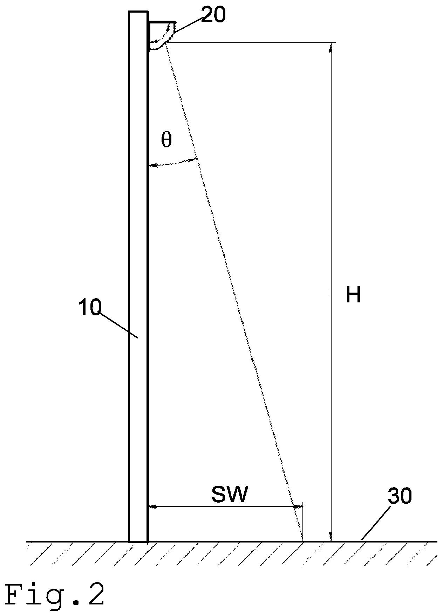

Die Figur 2 zeigt das Türelement 10 mit der daran montierten Türsensoreinrichtung 20 in einer Sicht auf die von der Drehachse D gemäß Figur 1 entfernte Stirnkante (Hauptschließkante). Es lässt sich erkennen, dass die Sendeeinrichtung 21 den oder die Überwachungsstrahlen S mit einem Abstrahlwinkel relativ zur Türblattebene E abstrahlt. Der Abstrahlwinkel bzw. der Abstrahlwinkelwert ist in der Figur 2 mit dem Bezugszeichen $\theta$ gekennzeichnet.

Durch den Abstrahlwinkel bzw. den Abstrahlwinkelwert $\theta$ wird eine Schutzfeldweite SW festgelegt, die den räumlichen Abstand zwischen jeder der Messstellen und dem Türelement 10 angibt. Die Schutzfeldweite SW berechnet sich wie folgt:

$$SW = H \tan\theta.$$

Durch den Abstrahlwinkel θ relativ zur Türblattebene E bzw. durch die Schutzfeldweite SW ergibt sich ein messstellenindividueller Vorlaufwinkel zwischen jeder der Messstellen und der Türblattebene E.

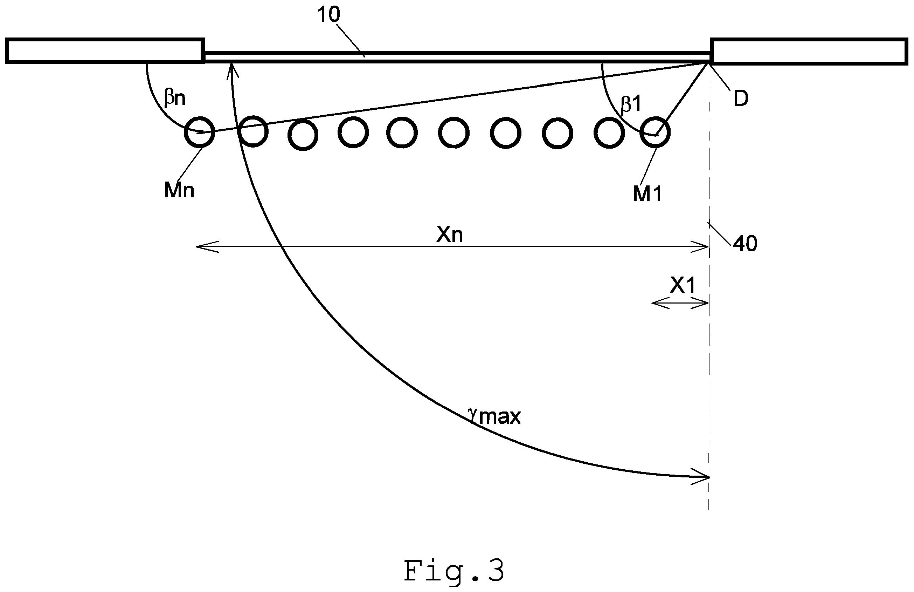

Die Figur 3 zeigt die Vorlaufwinkel der Messstellen M1 bis Mn am Beispiel der ersten Messstelle M1 und der n-ten Messstelle Mn näher im Detail. Die Vorlaufwinkel bzw. Vorlaufwinkelwerte der Messstellen M1 und Mn sind in der Figur 3 mit den Bezugzeichen β1 und βn gekennzeichnet.

Für die n Messstellen M1 bis Mn lassen sich die Vorlaufwinkelwerte wie folgt ermitteln:

$$\beta i = \arctan\left[\frac{H}{Xi} \tan\theta\right] \text{ mit } 1 \leq i \leq n$$

wobei βi den Vorlaufwinkelwert der i-ten Messstelle (1 ≤ i ≤ n), θ den Abstrahlwinkelwert, H den Höhenwert und Xi den Abstandswert der i-ten Messstelle von der Drehachse D bezeichnet.

Wird nun bei der Darstellung gemäß Figur 3 das Türelement 10 geöffnet und in Richtung einer vorgegebenen Schutzfeldgrenze 40 gedreht, so werden die Messstellen M1 bis Mn die Schutzfeldgrenze 40 zu unterschiedlichen Zeitpunkten bzw. bei unterschiedlichen Drehwinkeln γ des Türelements erreichen. Konkret wird die erste Messstelle M1 aufgrund ihres größten Vorlaufwinkels β1 zuerst die Schutzfeldgrenze 40 erreichen, wohingegen die n-te Messstelle Mn aufgrund ihres kleineren Vorlaufwinkels βn als letzte Messstelle auf die Schutzfeldgrenze 40 trifft.

Bei dem Ausführungsbeispiel gemäß der Figur 3 liegt die Schutzfeldgrenze 40 bei einem Drehwinkel des Türelements von 90°; dies ist nur beispielhaft zu verstehen, die Schutzfeldgrenze 40 kann auch bei einem anderen, also kleineren oder größeren Drehwinkel des Türelements liegen.

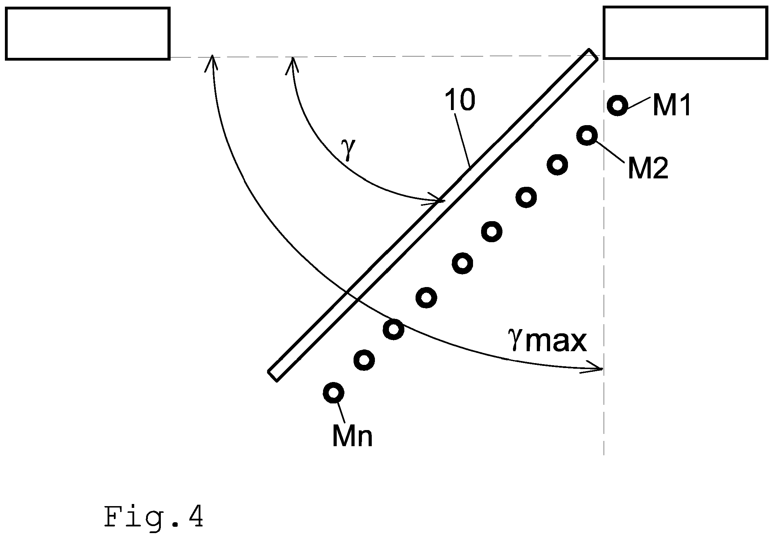

Die Figur 4 zeigt das Türelement 10 in einem teilgeöffneten Zustand. Der Drehwinkel des Türelements 10 bzw. dessen Winkelwert ist in der Figur 4 mit dem Bezugszeichen γ gekennzeichnet. Ein Maximalwert, der einen fest vorgegebenen maximal zulässigen Drehwinkel γ des Türelements 10 und damit die Winkellage der Schutzfeldgrenze 40 angibt, ist in der Figur 4 mit dem Bezugszeichen γmax gekennzeichnet.

In der Figur 4 lässt sich erkennen, dass - wie bereits im Zusammenhang mit der Figur 3 erläutert - die Messstellen M1 bis Mn die Schutzfeldgrenze 40 bei unterschiedlichen Drehwinkeln γ des Türelements 10 erreichen. Bei der Darstellung gemäß Figur 4 hat die erste Messstelle M1 die Schutzfeldgrenze 40 bereits passiert, die zweite Messstelle M2 liegt genau an der Schutzfeldgrenze 40.

Die Auswerteinrichtung 23 ist bei der Türsensoreinrichtung 20 gemäß den Figuren 1 bis 4 derart ausgestaltet, dass sie die Auswertung bzw. die Art der Auswertung der von den Messstellen M1 bis Mn empfangenen Strahlung in Abhängigkeit davon vornimmt, ob eine vorgegebene Ausschlussbedingung erfüllt ist oder nicht.

Vorteilhaft ist es, wenn die Auswerteinrichtung 23 die Ausschlussbedingung für diejenigen Messstellen Mi als erfüllt ansieht, für die die Winkelsumme aus dem Winkelwert **y,** der den jeweiligen Drehwinkel des Türelements 10 angibt, und dem messstellenindividuellen Vorlaufwinkelwert βi, der den Vorlaufwinkelwert der jeweiligen Messstelle Mi definiert, den Maximalwert ymax, der den maximal zulässigen Drehwinkel des Türelements 10 angibt, erreicht oder überschreitet. Konkret wird die Auswerteinrichtung 23 die Ausschlussbedingung also für diejenigen Messstellen Mi (1 ≤ i ≤ n), als erfüllt ansehen, für die gilt:

$$\gamma + \beta i \geq \gamma \max$$

In Abhängigkeit von dem Erfüllen oder Nichterfüllen der Ausschlussbedingung kann die Auswerteinrichtung 23 empfangene Strahlung der jeweiligen Messstelle Mi verwerten, verwerfen oder in anderer Weise auswerten. Beispielsweise kann die Auswerteinrichtung 23 die empfangene Strahlung von denjenigen Messstellen außer Betracht lassen bzw. verwerfen, für die die Ausschlussbedingung erfüllt ist.

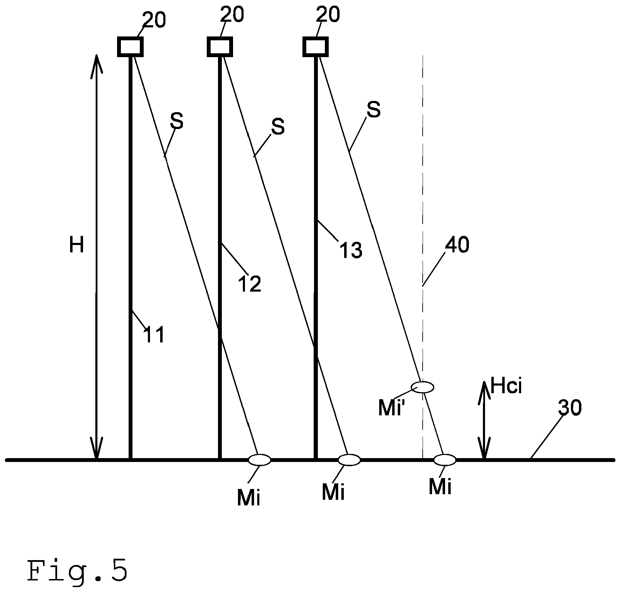

Alternativ kann die Auswerteinrichtung 23 die empfangene Strahlung von denjenigen Messstellen, bei denen die Ausschlussbedingung erfüllt ist, in anderer Weise verwerten bzw. auswerten als für diejenigen Messstellen, für die die Ausschlussbedingung nicht erfüllt ist. Dies soll beispielhaft nachfolgend im Zusammenhang mit der Figur 5 näher erläutert werden.

Die Figur 5 zeigt beispielhaft das Türelement 10 in einer Sicht auf die Stirnkante des Türelements 10 bei unterschiedlichen Öffnungswinkeln des Türelements:

Mit dem Bezugszeichen 11 ist das Türelement in der in der Figur 1 gezeigten geschlossenen Stellung gezeigt.

Das Bezugszeichen 12 zeigt das Türelement in einer Stellung, bei der die i-te Messstelle Mi die Schutzfeldgrenze 40 noch nicht erreicht hat.

Das Bezugzeichen 13 zeigt das Türelement, nachdem durch das Drehen um die Drehachse D in Figur 1 die Messstelle Mi die Schutzfeldgrenze 40 bereits passiert hat. So lässt sich in der Figur 5 erkennen, dass die Messstelle Mi jenseits der Schutzfeldgrenze 40 liegt.

Das Überschreiten der Schutzfeldgrenze 40 kann die Auswerteinrichtung 23 durch die Überprüfung der Ausschlussbedingung feststellen:

$$\gamma + \beta i \geq \gamma \max \quad ?$$

Da diese Ausschlussbedingung bei der mit dem Bezugszeichen 13 gekennzeichneten Stellung des Türelements erfüllt ist, wird die Auswerteinrichtung 23 die Messstelle Mi fiktiv nach oben verlagern, und zwar derart, dass die fiktiv verlagerte Messstelle Mi' genau auf der Schutzfeldgrenze 40 oberhalb des Fußbodens 30 liegt.

Die fiktiv verlagerte Messstelle Mi' liegt somit nicht mehr auf dem Fußboden 30, sondern weist gegenüber dem Fußboden 30 eine Höhe auf, die in der Figur 5 mit dem Bezugszeichen Hci gekennzeichnet ist. Die Höhe der fiktiv nach oben verlagerten Messstelle Mi' lässt sich wie folgt berechnen:

$$Hci = f(\theta, H, \gamma, \gamma \max, Xi) = H \cdot \left(1 - \frac{Xi \cdot \tan(\gamma \max - \gamma)}{H \cdot \tan(\theta)}\right)$$

wobei Hci die Höhe der fiktiv vom Fußboden nach oben verlagerten i-ten Messstelle und Xi einen messstellenindividuellen Abstandswert, der den radialen Abstand der jeweiligen i-ten Messstelle von der Drehachse D des Türelements angibt (siehe Figur 3), bezeichnet.

Nachdem nun die Auswerteinrichtung 23 die Höhe Hci der fiktiv nach oben verlagerten Messstelle Mi' ermittelt hat, kann sie die von dieser verlagerten Messstelle Mi' kommende Strahlung ausschließlich für einen Strahlbereich auswerten, der sich von der Türsensoreinrichtung 20 bis zu der verlagerten Messstelle Mi' erstreckt. Beispielsweise kann die Auswerteinrichtung 23 die Länge Li des Strahlwegs bis zu der fiktiv vom Fußboden 30 nach oben verlagerten Messstelle Mi' ermitteln gemäß:

$$Li = f(\theta, \gamma, \gamma \max, Xi) = \frac{Xi \cdot \tan(\gamma \max - \gamma)}{\sin(\theta)}$$

Die Auswerteinrichtung 23 kann nun beispielsweise ausschließlich solche empfangene Strahlung berücksichtigen, die maximal das Zweifache der Länge des Strahlweges Li zurückgelegt hat.

Das Berücksichtigen empfangener Strahlung in Abhängigkeit von der Länge Li des Strahlwegs ist beispielsweise möglich, wenn die Auswerteinrichtung 23 die Verzögerungszeit auswertet, die von dem Wegsenden des Überwachungsstrahls S durch die Sendeeinrichtung 21 bis zum Empfangen der empfangenen Strahlung durch die Empfangseinrichtung 22 vergeht. Alternativ oder zusätzlich kann vorgesehen sein, dass es sich bei der Empfangseinrichtung 22 um einen Distanzsensor handelt, der die Distanz empfangener Strahlung ermitteln kann und es somit der Auswerteinrichtung 23 ermöglicht, ausschließlich empfangene Strahlung bis zu der verlagerten Messstelle Mi' zu verwerten.

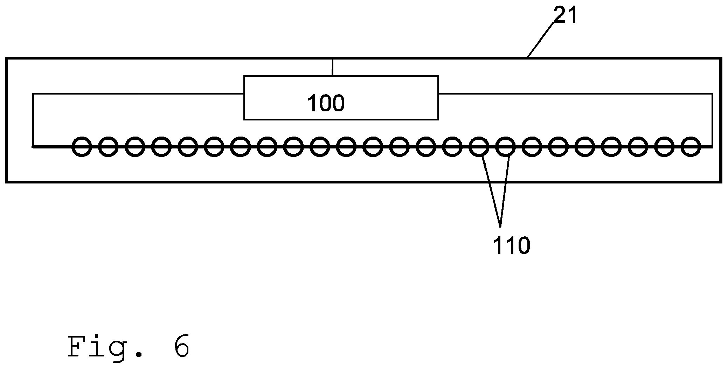

Die Figur 6 zeigt ein Ausführungsbeispiel für eine Sendeeinrichtung 21, die bei der Türsensoreinrichtung 20 gemäß den Figuren 1 bis 5 eingesetzt werden kann. Die Sendeeinrichtung 21 weist eine Stromquelle 100 auf, die mit einer Vielzahl an Lichtemittern 110 in Verbindung steht und diese mit Strom speisen kann. Bei den Lichtemittern kann es sich beispielsweise um Leuchtdioden, insbesondere Infrarotleuchtdioden, handeln.

Die Lichtemitter 110 sind bei dem Ausführungsbeispiel entlang einer geradlinigen Emitterlinie angeordnet, so dass sich die in den Figuren 1 bis 5 gezeigten und ebenfalls auf einer Linie liegenden Messstellen M1 bis Mn erzeugen lassen.

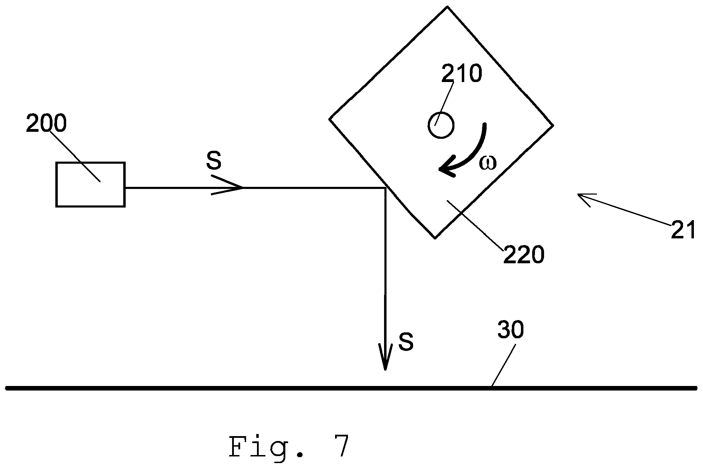

Die Figur 7 zeigt ein weiteres Ausführungsbeispiel für eine Sendeeinrichtung 21, die bei der Türsensoreinrichtung 20 gemäß den Figuren 1 bis 5 eingesetzt werden kann. Die Sendeeinrichtung 21 weist einen Lichtemitter 200 und einen um eine Achse 210 rotierenden Umlenkspiegel 220 auf, der die von dem Lichtemitter 200 erzeugte Strahlung je nach seiner jeweiligen Drehwinkelstellung ω umlenkt. Die Sendeeinrichtung 21 gemäß Figur 7 bildet somit eine Scannanordnung, die den Bereich vor dem Türelement 10 entlang einer Scannlinie unter Bildung einer Vielzahl an Messstellen scannt. Die Länge der Scannlinie oder die Anzahl der ausgewerteten Messstellen, die von der Auswerteinrichtung 23 ausgewertet werden, kann beispielsweise davon abhängig gemacht werden, wie viele Messstellen - in Abhängigkeit von dem Erfülltsein oder dem Nichterfülltsein der Ausschlussbedingung - ausgewertet oder verworfen werden sollen.

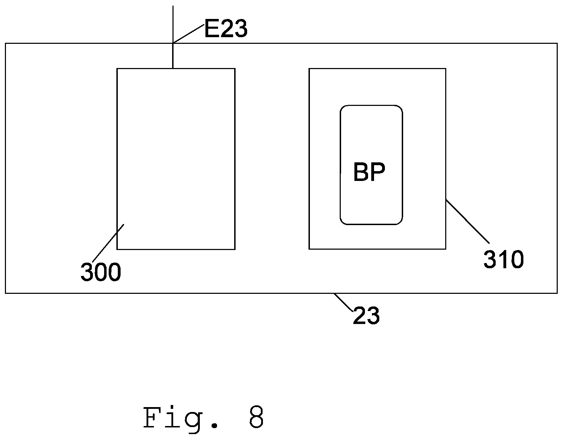

Die Figur 8 zeigt ein Ausführungsbeispiel für eine Auswerteinrichtung 23, die bei der Türsensoreinrichtung 20 gemäß den Figuren 1 bis 5 eingesetzt werden kann. Die Auswerteinrichtung 23 umfasst eine Recheneinrichtung 300 und einen Speicher 310. In dem Speicher 310 ist ein Betriebsprogramm BP abgespeichert, das den Betrieb der Recheneinrichtung 300 festlegt und es der Recheneinrichtung 300 ermöglicht, wie oben beschrieben zu arbeiten und die Ausschlussbedingung zu prüfen.

In dem Speicher 310 können beispielsweise einer oder mehrere der folgenden Werte abgespeichert sein:

- der den jeweiligen Drehwinkel des Türelements angebende Winkelwert y,
- der Maximalwert ymax, der den fest vorgegebenen, maximal zulässigen Drehwinkel des Türelements und damit die Lage der Schutzfeldgrenze 40 angibt,
- der Abstrahlwinkelwert $\theta$, der den Abstrahlwinkel zwischen dem oder den Überwachungsstrahlen S und der Türblattebene E angibt,
- der Höhenwert H, der die Anbauhöhe der Türsensoreinrichtung 20 an dem Türelement 10 über dem Fußboden 30 angibt, und
- die messstellenindividuellen Abstandswerte X1-Xn, die den radialen Abstand der jeweiligen Messstelle von der Drehachse D des Türelements 10 angeben.

Der Winkelwert $\gamma$, der Abstrahlwinkelwert $\theta$, der Höhenwert H und die messstellenindividuellen Abstandswerte X1-Xn können von der Türsensoreinrichtung 20 mittels eigener Sensoren selbst bestimmt und im Speicher 310 hinterlegt werden.

Sind die Messstellen äquidistant, so ist es vorteilhaft, wenn die Auswerteinrichtung 23 die messstellenindividuellen Abstandswerte der Messstellen M2-Mn auf der Basis eines Startwerts und eines messstellenindividuellen Relativwertes ermittelt. Der Startwert ist zum Beispiel der Abstandswert X1 zwischen der Messstelle M1 und der Drehachse D, und der messstellenindividuelle Relativwert ist zum Beispiel ein Rasterwert, der den Rasterabstand zwischen den Messstellen angibt.

Alternativ können die oben genannte Werte oder einzelne der oben genannten Werte im Rahmen einer montageseitigen Parametrierung der Türsensoreinrichtung 20 von außen an einer Eingabeschnittstelle E23 eingegeben und im Speicher 310 abgespeichert werden.

Die Eingabeschnittstelle E23 ermöglicht im Rahmen der montageseitigen Parametrierung der Türsensoreinrichtung 20 darüber hinaus die Eingabe des Maximalwerts ymax, der den fest vorgegebenen maximal zulässigen Drehwinkel des Türelements 10 und damit die Position der Schutzfeldgrenze 40 gemäß Figur 4 definiert.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| | |
|---|---|
| 10 | Türelement |
| 11 | geschlossene Stellung des Türelements |
| 12 | leicht geöffnete Stellung des Türelements |
| 12 | weit geöffnete Stellung des Türelements |
| 20 | Türsensoreinrichtung |
| 21 | Sendeeinrichtung |
| 22 | Empfangseinrichtung |
| 23 | Auswerteinrichtung |
| 30 | Fußboden |
| 40 | Schutzfeldgrenze |
| 100 | Stromquelle |
| 110 | Lichtemitter |
| 200 | Lichtemitter |
| 220 | Umlenkspiegel |
| 300 | Recheneinrichtung |
| 310 | Speicher |

| | |
|---|---|
| D | Drehachse |
| E | Türblattebene |
| E23 | Eingabeschnittstelle |

| H | Höhenwert |
| Hci | Höhe |
| Li | Länge |
| M1-Mn | Messstellen |
| Mi | Messstelle |
| Mi' | Messstelle |
| S | Überwachungsstrahlen |
| SW | Schutzfeldweite |
| E | Türblattebene |

| θ | Abstrahlwinkelwert |
| β1, βi | Vorlaufwinkelwerte |
| γ | Winkelwert |
| ymax | Maximalwert |
| ω | Drehwinkelstellung |

**Patentansprüche**

1. Türsensoreinrichtung (20) zur Montage an einem um eine Drehachse (D) drehbaren Türelement (10), insbesondere einer Drehflügeltür, mit

   - zumindest einer Sendeeinrichtung (21) zum Erzeugen zumindest eines winklig zu der Türblattebene (E) des Türelements (10) ausgerichteten Überwachungsstrahls (S) in Richtung Fußboden (30),
   - zumindest einer Empfangseinrichtung (22) zum Empfangen reflektierter oder zurück gestreuter Strahlung und
   - einer Auswerteinrichtung (23) zum Auswerten der von der Empfangseinrichtung (22) empfangenen Strahlung und Erzeugen eines Objekterkennungssignals,
   - wobei der oder die Überwachungsstrahlen (S) auf dem Fußboden (30) Messstellen (Ml-Mn) bilden, für die die Auswerteinrichtung (23) die empfangene Strahlung auswertet, **dadurch gekennzeichnet, dass**
   - die Auswerteinrichtung (23) derart ausgestaltet ist, dass sie prüft, ob eine vorgegebene Ausschlussbedingung erfüllt ist, wobei die Ausschlussbedingung von zumindest drei Werten abhängig ist, nämlich

      - von einem den jeweiligen Drehwinkel des Türelements (10) angebenden Winkelwert,
      - von einem der Auswerteinrichtung (23) vorgegebenen Maximalwert, der einen fest vorgegebenen, maximal zulässigen Drehwinkel des Türelements (10) angibt, und
      - von einem messstellenindividuellen Vorlaufwinkelwert, der den Winkel zwischen einer Strecke, die von der jeweiligen von dem Überwachungsstrahl (S) auf dem Fußboden (30) gebildeten Messstelle (M1-Mn) und der Drehachse (D) des Türelements (10) begrenzt wird, und der Türblattebene (E) angibt,

   - die Auswerteinrichtung (23) die Ausschlussbedingung für diejenigen Messstellen (M1-Mn) als erfüllt ansieht, für die die Winkelsumme aus dem Winkelwert und dem messstellenindividuellen Vorlaufwinkelwert den Maximalwert erreicht oder überschreitet,
   - die Auswerteinrichtung (23) die Höhe der Messstellen (M1-Mn), für die die Ausschlussbedingung erfüllt ist, fiktiv vom Fußboden (30) nach oben verlagert, und
   - die Auswerteinrichtung (23) die empfangene Strahlung bezogen auf die fiktiv vom Fußboden (30) nach oben verlagerte Messstelle auswertet.

2. Türsensoreinrichtung (20) nach Anspruch 1,
   **dadurch gekennzeichnet, dass**

   - die Auswerteinrichtung (23) empfangene Strahlung derjenigen Messstellen (M1-Mn) verwirft, in modifizierter Weise auswertet oder die Sendeeinrichtung (21) für diejenigen Messstellen (M1-Mn) abschaltet, für die die Ausschlussbedingung erfüllt ist.

3. Türsensoreinrichtung (20) nach einem der voranstehenden Ansprüche, **dadurch gekennzeichnet, dass** die Auswerteinrichtung (23), wenn sie die empfangene Strahlung bezogen auf die fiktiv vom Fußboden (30) nach oben verlagerte Messstelle auswertet, die empfangene Strahlung ausschließlich für einen Strahlbereich, der sich von der Türsensoreinrichtung (20) bis zu der vom Fußboden (30) nach oben verlagerten Messstelle erstreckt,

8

berücksichtigt.

4. Türsensoreinrichtung (20) nach einem der voranstehenden Ansprüche,
**dadurch gekennzeichnet, dass**
die Auswerteinrichtung (23) die Höhe der fiktiv vom Fußboden (30) nach oben verlagerten Messstelle ermittelt gemäß:

$$Hci = f(\theta, H, \gamma, \gamma\max, Xi) = H \cdot \left(1 - \frac{Xi \cdot \tan(\gamma\max - \gamma)}{H \cdot \tan(\theta)}\right) \quad (1 \leq i \leq n)$$

wobei

Hci die Höhe der fiktiv vom Fußboden (30) nach oben verlagerten i-ten Messstelle (Mi),
$\gamma$ einen den jeweiligen Drehwinkel des Türelements (10) angebenden Winkelwert,
ymax den Maximalwert, der den fest vorgegebenen, maximal zulässigen Drehwinkel des Türelements (10) angibt,
$\theta$ den Abstrahlwinkelwert, der den Abstrahlwinkel zwischen dem oder den Überwachungsstrahlen (S) und der Türblattebene (E) angibt,
H einen Höhenwert, der die Anbauhöhe der Türsensoreinrichtung (20) an dem Türelement (10) über dem Fußboden (30) angibt, und
Xi einen messstellenindividuellen Abstandswert, der den radialen Abstand der i-ten Messstelle (Mi) von der Drehachse (D) des Türelements (10) angibt,

bezeichnet.

5. Türsensoreinrichtung (20) nach einem der voranstehenden Ansprüche,
**dadurch gekennzeichnet, dass**
die Auswerteinrichtung (23) die Länge des Strahlweges bis zu der fiktiv vom Fußboden (30) nach oben verlagerten Messstelle (Mi') ermittelt gemäß:

$$Li = f(\theta, \gamma, \gamma\max, Xi) = \frac{Xi \cdot \tan(\gamma\max - \gamma)}{\sin(\theta)}$$

wobei

$\gamma$ einen den jeweiligen Drehwinkel des Türelements (10) angebenden Winkelwert,
ymax den Maximalwert, der den fest vorgegebenen, maximal zulässigen Drehwinkel des Türelements (10) angibt,
$\theta$ den Abstrahlwinkelwert, der den Abstrahlwinkel zwischen dem oder den Überwachungsstrahlen (S) und der Türblattebene (E) angibt,
Li Länge des Strahlweges und
Xi einen messstellenindividuellen Abstandswert, der den radialen Abstand der jeweiligen Messstelle (M1-Mn) von der Drehachse (D) des Türelements (10) angibt,
bezeichnet und
die Auswerteinrichtung (23) ausschließlich solche empfangene Strahlung berücksichtigt, die maximal das Zweifache der Länge des Strahlweges Li zurückgelegt hat.

6. Türsensoreinrichtung (20) nach einem der voranstehenden Ansprüche,
**dadurch gekennzeichnet, dass**
die Auswerteinrichtung (23) den messstellenindividuellen Vorlaufwinkelwert ermittelt unter Heranziehung

- eines Höhenwerts, der die Anbauhöhe der Türsensoreinrichtung (20) an dem Türelement (10) über dem Fußboden (30) angibt,
- eines Abstrahlwinkelwerts, der den Abstrahlwinkel zwischen dem oder den Überwachungsstrahlen (S) und der Türblattebene (E) angibt, und

- eines messstellenindividuellen Abstandswerts, der den Abstand der jeweiligen Messstelle (M1-Mn) von der Drehachse (D) des Türelements (10) angibt.

7. Türsensoreinrichtung (20) nach Anspruch 6,
**dadurch gekennzeichnet, dass**
die Auswerteinrichtung (23) den messstellenindividuellen Vorlaufwinkelwert ermittelt gemäß

$$\beta i = \arctan\left[\frac{H}{Xn}\tan\theta\right]$$

$\beta i$ den Vorlaufwinkelwert, $\theta$ den Abstrahlwinkelwert, H den Höhenwert und Xi den messstellenindividuellen Abstandswert bezeichnet.

8. Türsensoreinrichtung (20) nach einem der voranstehenden Ansprüche 6 bis 7,
**dadurch gekennzeichnet, dass**
die Türsensoreinrichtung (20) ihre Anbauhöhe selbst misst und den Höhenwert selbst bestimmt.

9. Türsensoreinrichtung (20) nach einem der voranstehenden Ansprüche 6 bis 8,
**dadurch gekennzeichnet, dass**
die Türsensoreinrichtung (20) eine Eingabeschnittstelle aufweist, die eine externe Eingabe des Höhenwerts ermöglicht.

10. Türsensoreinrichtung (20) nach einem der voranstehenden Ansprüche 6 bis 9,
**dadurch gekennzeichnet, dass**

- die Auswerteinrichtung (23) den messstellenindividuellen Abstandswert zumindest einer Messstelle (M1-Mn) auf der Basis eines Startwerts und eines messstellenindividuellen Relativwertes ermittelt,
- wobei der Startwert den Abstand der zu der Drehachse (D) des Türelements (10) nächstliegenden Messstelle (M1-Mn) von der Drehachse (D) angibt und
- wobei der messstellenindividuellen Relativwert den Abstand der zumindest einen Messstelle (M1-Mn) von der zu der Drehachse (D) des Türelements (10) nächstliegenden Messstelle (M1-Mn) angibt.

11. Türsensoreinrichtung (20) nach einem der voranstehenden Ansprüche 6 bis 10,
**dadurch gekennzeichnet, dass**
die Auswerteinrichtung (23) die messstellenindividuellen Abstandswerte auf der Basis eines Startwerts, der den Abstand der zu der Drehachse (D) nächstliegende Messstelle (M1-Mn) von der Drehachse (D) des Türelements (10) angibt, eines Rasterwerts, der den Rasterabstand zwischen den Messstellen (M1-Mn) angibt, und einer messstellenindividuellen Rasterposition der jeweiligen Messstelle (M1-Mn) bestimmt.

12. Türsensoreinrichtung (20) nach einem der voranstehenden Ansprüche 6 bis 11,
**dadurch gekennzeichnet, dass**
die Türsensoreinrichtung (20) ihren Abstand von der Drehachse (D) selbst misst und/oder den Startwert selbst bestimmt.

13. Türsensoreinrichtung (20) nach einem der voranstehenden Ansprüche 6 bis 12,
**dadurch gekennzeichnet, dass**
die Türsensoreinrichtung (20) den Abstrahlwinkelwert selbst bestimmt.

14. Türelement (10), insbesondere Drehflügeltür,
**dadurch gekennzeichnet, dass**
das Türelement (10) mit einer Türsensoreinrichtung (20) nach einem der voranstehenden Ansprüche ausgestattet ist.

15. Verfahren zum Betreiben einer Türsensoreinrichtung (20), die zur Montage an einem um eine Drehachse (D) drehbaren Türelement (10), insbesondere einer Drehflügeltür, geeignet ist, wobei

- zumindest ein winklig zu der Türblattebene (E) ausgerichteter Überwachungsstrahl (S) auf den Fußboden (30) gerichtet wird,

- reflektierte oder zurück gestreute Strahlung empfangen wird und
- empfangene Strahlung ausgewertet und ein Objekterkennungssignal gebildet wird,
- wobei der oder die Überwachungsstrahlen (S) auf dem Fußboden (30) Messstellen (M1-Mn) bilden, für die die empfangene Strahlung ausgewertet wird,

**dadurch gekennzeichnet, dass**

- geprüft wird, ob eine vorgegebene Ausschlussbedingung erfüllt ist, wobei die Ausschlussbedingung von zumindest drei Werten abhängig ist, nämlich

    - von einem den jeweiligen Drehwinkel des Türelements (10) angebenden Winkelwert,
    - von einem der Auswerteinrichtung (23) vorgegebenen Maximalwert, der einen fest vorgegebenen, maximal zulässigen Drehwinkel des Türelements (10) angibt, und
    - von einem messstellenindividuellen Vorlaufwinkelwert, der den Winkel zwischen einer Strecke, die von der jeweiligen von dem Überwachungsstrahl (S) auf dem Fußboden (30) gebildeten Messstelle (M1-Mn) und der Drehachse (D) des Türelements (10) begrenzt wird, und der Türblattebene (E) gebildet wird,

- die Ausschlussbedingung für diejenigen Messstellen (M1-Mn) als erfüllt angesehen wird, für die die Winkelsumme aus dem Winkelwert und dem messstellenindividuellen Vorlaufwinkelwert den Maximalwert erreicht oder überschreitet,
- die Höhe der Messstellen (M1-Mn), für die die Ausschlussbedingung erfüllt ist, fiktiv vom Fußboden (30) nach oben verlagert wird, und
- die empfangene Strahlung bezogen auf die fiktiv vom Fußboden (30) nach oben verlagerte Messstelle ausgewertet wird.

## Claims

1.  Door sensor device (20) for installation on a door element (10) that can turn about an axis of rotation (D), in particular a swing door, with

    - at least one transmitting device (21) for generating at least one monitoring beam (S) in the direction of the floor (30) and aligned at an angle to the door leaf plane (E) of the door element (10),
    - at least one receiving device (22) for receiving reflected or back-scattered radiation and
    - an evaluation device (23) for evaluating the radiation received by the receiving device (22) and generating an object detection signal,
    - wherein the monitoring beam or beams (S) form(s) measuring points (Ml-Mn) on the floor (30), for which the evaluation device (23) evaluates the received radiation,

    **characterized in that**

    - the evaluation device (23) is designed in such a way that it checks whether a predefined exclusion condition is fulfilled, wherein the exclusion condition is dependent on at least three values, specifically
    - on an angle value specifying the respective rotational angle of the door element (10),
    - on a maximum value predefined for the evaluation device (23), which specifies a fixed predefined maximum permissible rotational angle of the door element (10), and
    - on a measuring-point-specific advance angle value, which specifies the angle between a line segment delimited by the respective measuring point (Ml-Mn) formed by the monitoring beam (S) on the floor (30) and the axis of rotation (D) of the door element (10) and the door leaf plane (E),
    - the evaluation device (23) considers the exclusion condition to be fulfilled for those measuring points (Ml-Mn) for which the sum of the angles obtained from the angle value and the measuring-point-specific advance angle value reaches or exceeds the maximum value,
    - the evaluation device (23) notionally displaces the height of the measuring points (Ml-Mn) for which the exclusion condition is fulfilled upwards from the floor (30), and
    - the evaluation device (23) evaluates the received radiation with respect to the measuring point notionally displaced upwards from the floor (30).

2.  Door sensor device (20) according to Claim 1, **characterized in that**,

- for those measuring points (MI-Mn) for which the exclusion condition is fulfilled, the evaluation device (23) rejects the received radiation of those measuring points (M1-Mn), evaluates it in a modified way or switches off the transmitting device (21).

3. Door sensor device (20) according to either of the preceding claims, **characterized in that**, when it evaluates the received radiation with respect to the measuring point notionally displaced upwards from the floor (30), the evaluation device (23) takes into account the received radiation exclusively for a radiating region that extends from the door sensor device (20) up to the measuring point displaced upwards from the floor (30).

4. Door sensor device (20) according to one of the preceding claims,
   **characterized in that**
   the evaluation device (23) determines the height of the measuring point notionally displaced upwards from the floor (30) according to:

$$Hci = f(\theta, H, \gamma, \gamma\max, Xi) = H \cdot \left( 1 - \frac{Xi \cdot \tan(\gamma\max - \gamma)}{H \cdot \tan(\theta)} \right) \quad (1 \leq i \leq n)$$

where

Hci denotes the height of the ith measuring point (Mi) notionally displaced upwards from the floor (30),
$\gamma$ denotes an angle value specifying the respective rotational angle of the door element (10),
ymax denotes the maximum value, which specifies the fixed predefined maximum permissible rotational angle of the door element (10),
$\theta$ denotes the emitting angle value, which specifies the emitting angle between the monitoring beam or beams (S) and the door leaf plane (E),
H denotes a height value, which specifies the fitting height of the door sensor device (20) on the door element (10) above the floor (30), and
Xi denotes a measuring-point-specific distance value, which specifies the radial distance of the ith measuring point (Mi) from the axis of rotation (D) of the door element (10).

5. Door sensor device (20) according to one of the preceding claims,
   **characterized in that**
   the evaluation device (23) determines the length of the radiating path up to the measuring point (Mi') notionally displaced upwards from the floor (30) according to:

$$Li = f(\theta, \gamma, \gamma\max, Xi) = \frac{Xi \cdot \tan(\gamma\max - \gamma)}{\sin(\theta)}$$

where

$\gamma$ denotes an angle value specifying the respective rotational angle of the door element (10),
ymax denotes the maximum value, which specifies the fixed predetermined maximum permissible rotational angle of the door element (10),
$\theta$ denotes the emitting angle value, which specifies the emitting angle between the monitoring beam or beams (S) and the door leaf plane (E),
Li denotes the length of the radiating path and
Xi denotes a measuring-point-specific distance value, which specifies the radial distance of the respective measuring point (MI-Mn) from the axis of rotation (D) of the door element (10),
and
the evaluation device (23) exclusively takes into account received radiation that has, as a maximum, covered twice the length of the radiating path Li.

6. Door sensor device (20) according to one of the preceding claims,
   **characterized in that**
   the evaluation device (23) determines the measuring-point-specific advance angle value by taking

- a height value that specifies the fitting height of the door sensor device (20) on the door element (10) above the floor (30),
- an emitting angle value that specifies the emitting angle between the monitoring beam or beams (S) and the door leaf plane (E), and
- a measuring-point-specific distance value that specifies the distance of the respective measuring point (Ml-Mn) from the axis of rotation (D) of the door element (10).

7. Door sensor device (20) according to Claim 6, **characterized in that**
the evaluation device (23) determines the measuring-point-specific advance angle value according to

$$\beta i = \arctan\left[\frac{H}{Xn}\tan\theta\right]$$

$\beta i$ denotes the advance angle value, $\theta$ denotes the emitting angle value, H denotes the height value and Xi denotes the measuring-point-specific distance value.

8. Door sensor device (20) according to either of the preceding Claims 6 and 7,
**characterized in that**
the door sensor device (20) measures its fitting height itself and determines the height value itself.

9. Door sensor device (20) according to one of the preceding Claims 6 to 8,
**characterized in that**
the door sensor device (20) has an input interface, which allows an external input of the height value.

10. Door sensor device (20) according to one of the preceding Claims 6 to 9,
**characterized in that**

- the evaluation device (23) determines the measuring-point-specific distance value of at least one measuring point (Ml-Mn) on the basis of a starting value and a measuring-point-specific relative value,
- wherein the starting value specifies the distance of the measuring point (Ml-Mn) closest to the axis of rotation (D) of the door element (10) from the axis of rotation (D) and
- wherein the measuring-point-specific relative value specifies the distance of the at least one measuring point (Ml-Mn) from the measuring point (Ml-Mn) closest to the axis of rotation (D) of the door element (10).

11. Door sensor device (20) according to one of the preceding Claims 6 to 10,
**characterized in that**
the evaluation device (23) determines the measuring-point-specific distance values on the basis of a starting value that specifies the distance of the measuring point (Ml-Mn) closest to the axis of rotation (D) from the axis of rotation (D) of the door element (10), a raster value, which specifies the raster spacing between the measuring points (M1-Mn), and a measuring-point-specific raster position of the respective measuring point (M1-Mn).

12. Door sensor device (20) according to one of the preceding Claims 6 to 11,
**characterized in that**
the door sensor device (20) measures its distance from the axis of rotation (D) itself and/or determines the starting value itself.

13. Door sensor device (20) according to one of the preceding Claims 6 to 12,
**characterized in that**
the door sensor device (20) determines the emitting angle value itself.

14. Door element (10), in particular a swing door,
**characterized in that**
the door element (10) is equipped with a door sensor device (20) according to one of the preceding claims.

15. Method for operating a door sensor device (20) which is suitable for installation on a door element (10) that can turn about an axis of rotation (D), in particular a swing door, wherein

- at least one monitoring beam (S) is directed at the floor (30) and aligned at an angle to the door leaf plane (E),
- reflected or back-scattered radiation is received and
- received radiation is evaluated and an object detection signal is formed,
- wherein the monitoring beam or beams (S) form(s) measuring points (MI-Mn) on the floor (30), for which the received radiation is evaluated,

**characterized in that**

- it is checked whether a predefined exclusion condition is fulfilled, wherein the exclusion condition is dependent on at least three values, specifically
- on an angle value specifying the respective rotational angle of the door element (10),
- on a maximum value predefined for the evaluation device (23), which specifies a fixed predefined maximum permissible rotational angle of the door element (10), and
- on a measuring-point-specific advance angle value, which the angle is formed between a line segment delimited by the respective measuring point (MI-Mn) formed by the monitoring beam (S) on the floor (30) and the axis of rotation (D) of the door element (10) and the door leaf plane (E),
- the exclusion condition is considered to be fulfilled for those measuring points (MI-Mn) for which the sum of the angles obtained from the angle value and the measuring-point-specific advance angle value reaches or exceeds the maximum value,
- the height of the measuring points (MI-Mn) for which the exclusion condition is fulfilled is notionally displaced upwards from the floor (30), and
- the received radiation is evaluated with respect to the measuring point notionally displaced upwards from the floor (30).

**Revendications**

1. Dispositif de détection de porte (20) destiné à être monté sur un élément de porte (10) pouvant être tourné sur un axe de rotation (D), notamment une porte battante, ledit dispositif comprenant

   - au moins un dispositif d'émission (21) destiné à générer en direction du sol (30) au moins un faisceau de surveillance (S) orienté angulairement par rapport au plan du vantail de porte (E) de l'élément de porte (10),
   - au moins un dispositif de réception (22) destiné à recevoir le rayonnement réfléchi ou rétrodiffusé et
   - un dispositif d'évaluation (23) destiné à évaluer le rayonnement reçu par le dispositif de réception (22) et à générer un signal de détection d'objet,
   - le ou les faisceaux de surveillance (S) forment sur le sol (30) des points de mesure (M1- Mn) pour lesquels le dispositif d'évaluation (23) évalue le rayonnement reçu,

   **caractérisé en ce que**

   - le dispositif d'évaluation (23) est conçu de manière à vérifier si une condition d'exclusion spécifiée est remplie, la condition d'exclusion dépendant d'au moins trois valeurs, à savoir

      - d'une valeur d'angle indiquant l'angle de rotation respectif de l'élément de porte (10),
      - d'une valeur maximale spécifiée par le dispositif d'évaluation (23), laquelle indique un angle de rotation maximal admissible, spécifié comme étant fixe, de l'élément de porte (10) et
      - d'une valeur d'angle préliminaire qui est propre à un point de mesure et qui indique l'angle formé entre un trajet, qui est délimité par le point de mesure respectif (MI-Mn) formé sur le sol (30) par le faisceau de surveillance (S) et l'axe de rotation (D) de l'élément de porte (10), et le plan du vantail de porte (E),

   - le dispositif d'évaluation (23) considère que la condition d'exclusion est remplie pour les points de mesure (MI-Mn) pour lesquels la somme angulaire de la valeur d'angle et de la valeur d'angle préliminaire propre au point de mesure atteint ou dépasse la valeur maximale,
   - le dispositif d'évaluation (23) décale la hauteur des points de mesure (M1-Mn), pour lesquels la condition d'exclusion est remplie, de manière fictive depuis le sol (30) vers le haut, et
   - le dispositif d'évaluation (23) évalue le rayonnement reçu par rapport au point de mesure décalé de manière fictive depuis le sol (30) vers le haut.

**2.** Dispositif de détection de porte (20) selon la revendication 1, **caractérisé en ce que**

- le dispositif d'évaluation (23) rejette le rayonnement reçu de ces points de mesure (M1-Mn), l'évalue d'une manière modifiée ou désactive le dispositif d'émission (21) pour les points de mesure (Ml-Mn) pour lesquels la condition d'exclusion est remplie.

**3.** Dispositif de détection de porte (20) selon l'une des revendications précédentes, **caractérisé en ce que** le dispositif d'évaluation (23), lorsqu'il évalue le rayonnement reçu par rapport au point de mesure décalé de manière fictive depuis le sol (30) vers le haut, prend en compte le rayonnement reçu exclusivement pour une zone de faisceau qui s'étend du dispositif de détection de porte (20) jusqu'au point de mesure décalé depuis le sol (30) vers le haut.

**4.** Dispositif de détection de porte (20) selon l'une des revendications précédentes, **caractérisé en ce que** le dispositif d'évaluation (23) détermine la hauteur du point de mesure qui est décalée de manière fictive depuis le sol (30) vers le haut conformément à :

$$Hci = f(\theta, H, \gamma, \gamma\max, Xi) = H \cdot \left(1 - \frac{Xi \cdot \tan(\gamma\max - \gamma)}{H \cdot \tan(\theta)}\right) \quad (1 \leq i \leq n)$$

Hci étant la hauteur du i-ième point de mesure (Mi) décalée de manière fictive vers le haut depuis le sol (30),

$\gamma$ étant une valeur d'angle indiquant l'angle de rotation respectif de l'élément de porte (10),
ymax étant la valeur maximale qui indique l'angle de rotation maximal admissible, spécifié comme étant fixe, de l'élément de porte (10),
$\theta$ étant la valeur de l'angle de rayonnement qui indique l'angle de rayonnement entre le ou les faisceaux de surveillance (S) et le plan de vantail de porte (E),
H étant une valeur de hauteur qui indique la hauteur d'installation du dispositif de détection de porte (20) sur l'élément de porte (10) au-dessus du sol (30), et
Xi étant une valeur de distance propre au point de mesure qui représente la distance radiale du i-ième point de mesure (Mi) à l'axe de rotation (D) de l'élément de porte (10).

**5.** Dispositif de détection de porte (20) selon l'une des revendications précédentes, **caractérisé en ce que** le dispositif d'évaluation (23) détermine la longueur du chemin de faisceau jusqu'au point de mesure (Mi') qui est décalé de manière fictive depuis le sol (30) vers le haut conformément à :

$$Li = f(\theta, \gamma, \gamma\max, Xi) = \frac{Xi \cdot \tan(\gamma\max - \gamma)}{\sin(\theta)}$$

$\gamma$ étant une valeur d'angle indiquant l'angle de rotation respectif de l'élément de porte (10),

ymax étant la valeur maximale qui indique l'angle de rotation maximal admissible, spécifié comme étant fixe, de l'élément de porte (10),
$\theta$ étant la valeur de l'angle de rayonnement qui indique l'angle de rayonnement formé entre le ou les faisceaux de surveillance (S) et le plan de vantail de porte (E), Li étant la longueur du chemin de faisceau et
Xi étant une valeur de distance propre au point de mesure qui indique la distance radiale du point de mesure respectif (Ml-Mn) à l'axe de rotation (D) de l'élément de porte (10), et
le dispositif d'évaluation (23) ne prend en compte que le rayonnement reçu qui a parcouru au maximum deux fois la longueur du chemin de faisceau Li.

**6.** Dispositif de détection de porte (20) selon l'une des revendications précédentes, **caractérisé en ce que** le dispositif d'évaluation (23) détermine la valeur de l'angle préliminaire propre au point de mesure à l'aide

- d'une valeur de hauteur qui indique la hauteur d'installation du dispositif de détection de porte (20) sur l'élément de porte (10) au-dessus du sol (30),
- d'une valeur d'angle de rayonnement qui indique l'angle de rayonnement entre le ou les faisceaux de surveillance (S) et le plan de vantail de porte (E), et

- d'une valeur de distance propre au point de mesure qui indique la distance du point de mesure respectif (Ml-Mn) à l'axe de rotation (D) de l'élément de porte (10) .

7. Dispositif de détection de porte (20) selon la revendication 6, **caractérisé en ce que** le dispositif d'évaluation (23) détermine la valeur d'angle préliminaire propre au point de mesure conformément à

$$\beta i = \arctan\left[\frac{H}{Xn}\tan\theta\right]$$

βi étant la valeur de l'angle préliminaire, θ étant la valeur d'angle de rayonnement, H étant la valeur de la hauteur et Xi étant la valeur de distance propre au point de mesure.

8. Dispositif de détection de porte (20) selon l'une des revendications précédentes 6 à 7, **caractérisé en ce que** le dispositif de détection de porte (20) mesure lui-même sa hauteur de montage et détermine lui-même la valeur de hauteur.

9. Dispositif de détection de porte (20) selon l'une des revendications précédentes 6 à 8, **caractérisé en ce que** le dispositif de détection de porte (20) comporte une interface d'entrée qui permet une entrée extérieure de la valeur de hauteur.

10. Dispositif de détection de porte (20) selon l'une des revendications précédentes 6 à 9, **caractérisé en ce que**

- le dispositif d'évaluation (23) détermine la valeur de distance propre au point de mesure d'au moins un point de mesure (Ml-Mn) sur la base d'une valeur de départ et d'une valeur relative propre au point de mesure,
- la valeur de départ indiquant la distance du point de mesure (Ml-Mn) le plus proche de l'axe de rotation (D) de l'élément de porte (10) à l'axe de rotation (D) et
- la valeur relative propre au point de mesure indiquant la distance de l'au moins un point de mesure (Ml-Mn) au point de mesure (Ml-Mn) le plus proche de l'axe de rotation (D) de l'élément de porte (10).

11. Dispositif de détection de porte (20) selon l'une des revendications précédentes 6 à 10, **caractérisé en ce que** le dispositif d'évaluation (23) détermine les valeurs de distance propres à un point de mesure sur la base d'une valeur de départ, qui indique la distance entre le point de mesure (Ml-Mn) le plus proche de l'axe de rotation (D) à l'axe de rotation (D) de l'élément de porte (10), une valeur de trame qui indique la distance de trame entre les points de mesure (Ml-Mn) et une position de trame propre au point de mesure du point de mesure respectif (M1-Mn).

12. Dispositif de détection de porte (20) selon l'une des revendications précédentes 6 à 11, **caractérisé en ce que** le dispositif de détection de porte (20) mesure lui-même sa distance à l'axe de rotation (D) et/ou détermine lui-même la valeur de départ.

13. Dispositif de détection de porte (20) selon l'une des revendications précédentes 6 à 12, **caractérisé en ce que** le dispositif de détection de porte (20) détermine lui-même la valeur d'angle de rayonnement.

14. Élément de porte (10), notamment porte battante, **caractérisé en ce que** l'élément de porte (10) est équipé d'un dispositif de détection de porte (20) selon l'une des revendications précédentes.

15. Procédé de fonctionnement d'un dispositif de détection de porte (20) qui est adapté pour être monté sur un élément de porte (10), notamment une porte battante, qui peut être tourné sur un axe de rotation (D)

- au moins un faisceau de surveillance (S) orienté angulairement par rapport au plan de vantail de porte (E) étant dirigé vers le sol (30),
- un rayonnement réfléchi ou rétrodiffusé étant reçu et
- le rayonnement reçu étant évalué et un signal de détection d'objet étant formé,
- le ou les faisceaux de surveillance (S) formant sur le sol (30) des points de mesure (Ml-Mn) pour lesquels le rayonnement reçu est évalué,

**caractérisé en ce que**

- on vérifie si une condition d'exclusion spécifiée est remplie, la condition d'exclusion dépendant d'au moins trois valeurs, à savoir

  - d'une valeur d'angle indiquant l'angle de rotation respectif de l'élément de porte (10),
  - d'une valeur maximale spécifiée par le dispositif d'évaluation (23), laquelle indique un angle de rotation maximal admissible, spécifié comme étant fixe, de l'élément de porte (10) et
  - d'une valeur d'angle préliminaire qui est propre à un point de mesure et qui indique l'angle formé entre un trajet, qui est délimité par le point de mesure respectif (Ml-Mn) formé sur le sol (30) par le faisceau de surveillance (S) et l'axe de rotation (D) de l'élément de porte (10), et le plan du vantail de porte (E),

- la condition d'exclusion est considérée comme remplie pour les points de mesure (Ml-Mn) pour lesquels la somme angulaire de la valeur d'angle et de la valeur d'angle préliminaire propre au point de mesure atteint ou dépasse la valeur maximale,
- la hauteur des points de mesure (M1-Mn), pour lesquels la condition d'exclusion est remplie, étant décalée de manière fictive depuis le sol (30) vers le haut, et
- le rayonnement reçu étant évalué par rapport au point de mesure décalé de manière fictive depuis le sol (30) vers le haut.

Fig. 1

Fig.2

D

40

X1

M1

β1

Xn

γmax

10

βn

Mn

Fig. 3

Fig.4

EP 3 695 249 B1

Fig.5

Fig. 6

Fig. 7

EP 3 695 249 B1

EP 3 695 249 B1

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1375808 A2
- DE 102008044990 B4
- US 4851746 A